(19) Europäisches Patentamt / European Patent Office / Office européen des brevets

(11) **EP 3 582 042 B1**

(12) **EUROPEAN PATENT SPECIFICATION**

(45) Date of publication and mention of the grant of the patent:
**18.09.2024 Bulletin 2024/38**

(21) Application number: **18751609.1**

(22) Date of filing: **05.02.2018**

(51) International Patent Classification (IPC):
**G05B 19/4068** (2006.01)

(52) Cooperative Patent Classification (CPC):
**G05B 19/4068;** G05B 2219/35354;
G05B 2219/37607; G05B 2219/39363

(86) International application number:
**PCT/JP2018/003841**

(87) International publication number:
**WO 2018/147232 (16.08.2018 Gazette 2018/33)**

(54) **MOTION EVALUATION METHOD, EVALUATION DEVICE, PARAMETER ADJUSTMENT METHOD USING SAID EVALUATION METHOD, WORKPIECE MACHINING METHOD, AND MACHINE TOOL**

BEWEGUNGSAUSWERTUNGSVERFAHREN, AUSWERTUNGSVORRICHTUNG, PARAMETEREINSTELLUNGSVERFAHREN UNTER VERWENDUNG DES AUSWERTUNGSVERFAHRENS, WERKSTÜCKBEARBEITUNGSVERFAHREN UND WERKZEUGMASCHINE

PROCÉDÉ D'ÉVALUATION DE MOUVEMENT, DISPOSITIF D'ÉVALUATION, PROCÉDÉ D'AJUSTEMENT DE PARAMÈTRE UTILISANT LEDIT PROCÉDÉ D'ÉVALUATION, PROCÉDÉ D'USINAGE DE PIÈCE ET MACHINE-OUTIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2017 JP 2017023526**

(43) Date of publication of application:
**18.12.2019 Bulletin 2019/51**

(73) Proprietor: **Makino Milling Machine Co., Ltd.**
**Tokyo 152-8578 (JP)**

(72) Inventors:
• **SATO, Ryuta**
**Kobe-shi**
**Hyogo 657-8501 (JP)**
• **NAKANISHI, Takumi**
**Kobe-shi**
**Hyogo 657-8501 (JP)**
• **ODA, Mitsunari**
**Aiko-gun**
**Kanagawa 243-0303 (JP)**
• **NAKAYAMA, Nobu**
**Aiko-gun**
**Kanagawa 243-0303 (JP)**

(74) Representative: **McWilliams, David John**
**Withers & Rogers LLP**
**2 London Bridge**
**London SE1 9RA (GB)**

(56) References cited:
EP-A1- 3 255 379          WO-A1-2016/125797
WO-A1-2017/150578      JP-A- 2004 525 467
JP-A- 2013 191 186        US-A1- 2016 246 286

• SATO YUKI ET AL: "Study on the evaluation method for finished surface based on human visual characteristic", 2016 INTERNATIONAL SYMPOSIUM ON FLEXIBLE AUTOMATION (ISFA), IEEE, 1 August 2016 (2016-08-01), pages 428 - 431, XP033027008, DOI: 10.1109/ISFA.2016.7790201
• SATO, RYUTA ET AL.: "Finished Surface Evaluation Method based on the Human Visual Characteristic", THE JAPAN SOCIETY FOR PRECISION ENGINEERING, 4 September 2015 (2015-09-04), pages 253 - 254, XP055534804, Retrieved from the Internet <URL:https://www.jstage.jst.go.jp/article/pscjspe/2015A/0/2015A_253/_pdf> [retrieved on 20180417]

EP 3 582 042 B1

• NAKANISHI, TAKUMI ET AL.: "Finished Surface Evaluation based on the Human Visual Characteristic - Influence of Surface Roughness onto the Recognition Limit of Normal Vector Changes", LECTURE PROCEEDINGS OF THE JAPAN SOCIETY FOR PRECISION ENGINEERING-2016 FALL ACADEMIC LECTURE, 15 March 2016 (2016-03-15), pages 745 - 746, XP055534811, Retrieved from the Internet <URL:https://www.jstage.jst.go.jp/article/pscjspe/2016S/0/2016S_745/_pdf> [retrieved on 20180417]

**Description**

FIELD

The present invention relates to a motion evaluation method for evaluating motion characteristics of a machine tool based on visual characteristics to a person, an evaluation device, and a workpiece machining method and machine tool using the evaluation method.

BACKGROUND

When machining is performed by a numerically controlled machine tool, unwanted streak-like machining marks may appear on the machined surface, due to trajectory errors at quadrant glitches or steps that occur when the motion direction of the feed axis is reversed. Trajectory errors at quadrant glitches and steps can be reduced by appropriately setting the controller parameters of the controller. Patent Literature 1 discloses a method for adjusting numerical controller parameters based on measurement results of circular motion trajectory. Furthermore, Patent Literature 1 describes performing circular motion test, and adjusting parameters so as to minimize trajectory errors.

[CITATION LIST]

[PATENT LITERATURE]

[PTL 1] Japanese Unexamined Patent Publication (Kokai) No. 2009-80616
[PTL 2] A known example of a shape evaluation method is described in WO 2016/125797 A1.

[NON PATENT LITERATURE]

[NPL 1] JIS B6190-4: Machine Tool Test Method Standards Part 4: Circular motion test by Numerical Control
[NPL 2] SATO YUKI ET AL: "Study on the evaluation method for finished surface based on human visual characteristic", 2016 INTERNATIONAL SYMPOSIUM ON FLEXIBLE AUTOMATION (ISFA), IEEE, 1 August 2016 (2016-08-01), Pages 428-431, XP033027008

SUMMARY

[TECHNICAL PROBLEM]

The present invention aims to provide a motion evaluation method for evaluating motion characteristics of a numerically controlled machine tool based on characteristics which are visible to a person, and to provide a workpiece machining method in which parameters are adjustable based on such evaluation.

[SOLUTION TO PROBLEM]

In order to achieve the above object, the present invention provides a parameter adjustment method as defined in the appended claims.

[ADVANTAGEOUS EFFECTS OF INVENTION]

According to the present invention, a method for evaluating an object surface based on visual characteristics to a person is provided. Furthermore, according to the present invention, it can be easily judged whether or not streak-like machining marks on a machined surface are visible to a person, the effect of which is significant.

BRIEF DESCRIPTION OF DRAWINGS

FIG. 1 is a block diagram of a machine tool motion evaluation device according to a preferred embodiment of the present invention.
FIG. 2 is a schematic view showing examples of circular motion trajectory.
FIG. 3 is a view showing a cylindrical machined surface near 90°.
FIG. 4 is a view detailing a method for determining a normal direction change rate.
FIG. 5 is a view detailing a method for determining an angle of a normal direction from coordinate information.
FIG. 6 is a view detailing a method for evaluating the motion of a machine tool from the normal direction change rate.
FIG. 7 is a block diagram showing an application example of a motion evaluation device according to the present invention.
FIG. 8 is a block diagram showing another application example of a motion evaluation device according to the present invention.
FIG. 9 is a view showing the effects of adjustment of control parameters of a machine tool by a parameter adjustment method according to the present invention.
FIG. 10 is a view showing a cylindrical machined surface near 90° when the control parameters of the machine tool according to the present invention have been adjusted.

DESCRIPTION OF EMBODIMENTS

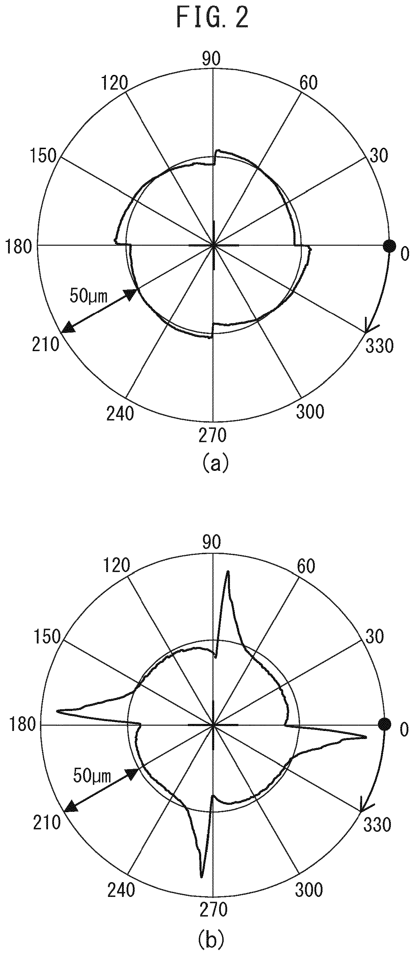

Quadrant glitches and step-like machining marks occur when the motion direction of a feed axis is reversed such as along a cylindrical surface or in a circumferential groove using a machine tool comprising an at least three-axis feed device which machines a workpiece by moving a tool mounted on a spindle and a workpiece relative to each other. Non-Patent Literature 1 defines a circular motion test by numerical control accompanied by such feed axis reversal. The circular motion test results are evaluated by enlarging the radial error of the circular motion trajectory. Examples of circular motion trajectory measurement results are shown in FIG 2.

FIG. 2(a) shows step-like trajectory errors of about 5 micrometers which occur at the time of quadrant switching in which each feed axis is reversed. FIG. 2(b) shows protrusion-like trajectory errors (quadrant glitches) of about 50 micrometers which occur at the time of quadrant switching in which each feed axis is reversed. Conventionally, parameters are adjusted so as to minimize trajectory errors to the greatest extent possible. Specifically, the trajectory shown in FIG. 2(a) is more preferable than the trajectory shown in FIG. 2(b).

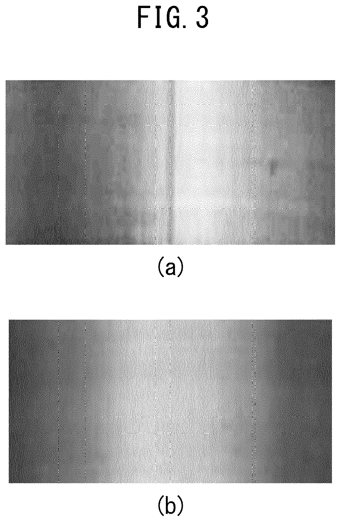

These trajectory errors appear as streak-like machining marks on the machined surface. FIG. 3 shows the results of photography of a machined surface in which trajectory errors have occurred in the vicinity of 90° when cylindrical machining is performed using a peripheral blade of a square end mill under conditions identical to those measured for the motion trajectories of FIG. 2. With reference to FIG. 3, while clear streak-like machining marks appear in FIG. 3(a), in which the trajectory errors are small, machining marks cannot be observed in FIG. 3 (b). Thus, from the viewpoint of the appearance of the machined surface, the trajectory shown in FIG. 2(b) is more preferable than the trajectory shown in FIG. 2(a). In the conventional evaluation method and adjustment method, the appearance of the machined surface is not considered in the evaluation results, and adjustment of the parameters does not necessarily reduce the appearance of defects.

The preferred embodiments of the present invention for solving such problems will be described below with reference to the attached drawings.

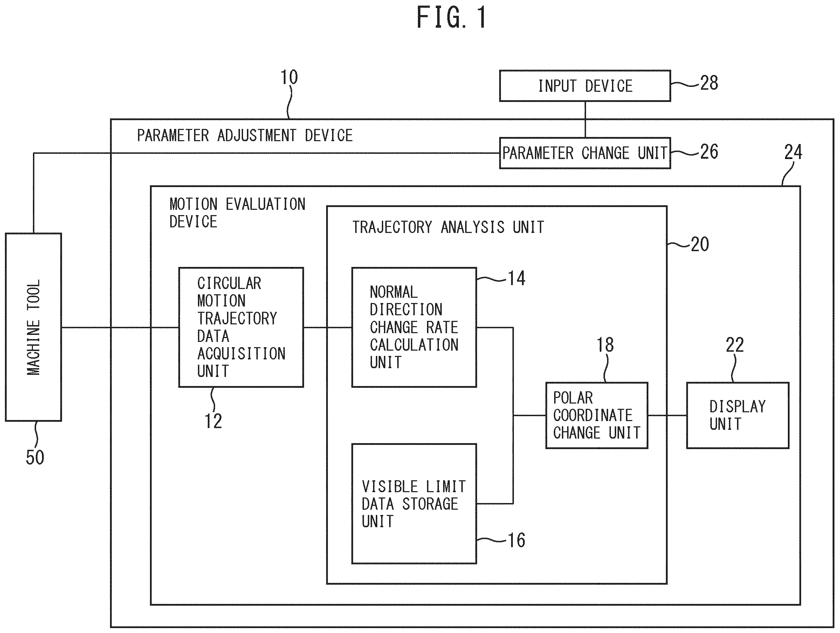

With reference to FIG. 1, the parameter adjustment device 10, as the object surface evaluation device of the present invention, comprises a motion evaluation device 24, and a parameter change unit 26. The motion evaluation device 24 comprises, as primary constituent elements, a circular motion trajectory data acquisition unit 12, a trajectory analysis unit 20 including a normal direction change rate calculation unit 14, a visible limit data storage unit 16 and a polar coordinate change unit 18, and a display unit 22. The trajectory analysis unit 20 can be constituted by a CPU, RAM, ROM, hard disk, SSD, bidirectional busses for connecting these components, and relevant programs. The display unit 22 can be constituted by a liquid crystal panel or a touch panel.

The circular motion trajectory data acquisition unit 12, as will be described later, acquires circular motion trajectory data or coordinate values of the feed axes from the NC device of the machine tool 50 when spindle of the machine tool 50 undergoes in-plane circular motion. Alternatively, the circular motion data may be obtained by performing cylindrical machining on a workpiece and measuring the shape thereof using a roundness measurement instrument or the like.

Furthermore, the parameter change unit 26 changes the control parameters of the machine tool 50 in accordance with commands input by the operator via the input device 28. The input device 26 can be, for example, a keyboard, a mouse, or alternatively, can be the touch panel constituting the display unit 22.

In general, a person can visually recognize a shape change in portions in which the normal direction change rate of the object surface is large, and a person cannot visually recognize a shape change in portions in which the normal direction change rate is small. The limits of normal direction change rate at which a person can visually recognize shape change are stored in the visible limit data storage unit 16. These limits of normal direction change rate at which a person can visually recognize shape change can be obtained by preparing a plurality of test pieces having a plurality of different known normal direction change rates, determining whether the shape change can be visually recognized by a plurality of observers, and averaging the normal direction change rates at that time.

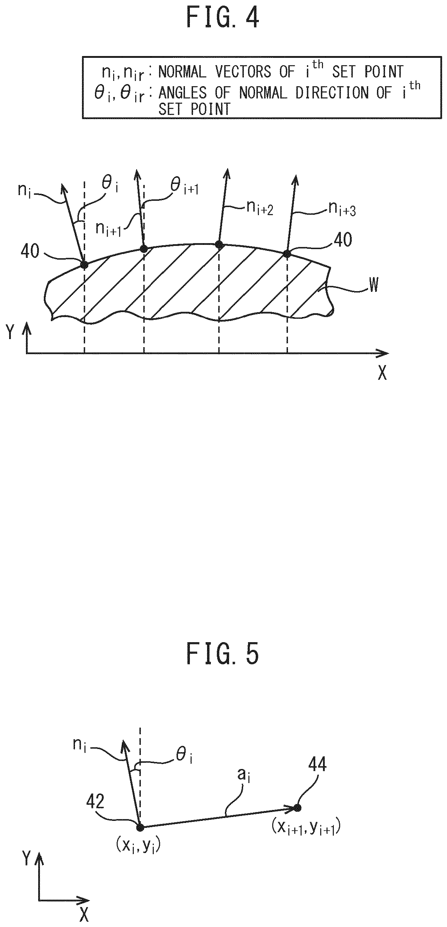

The normal direction change rate calculation unit 14 calculates the normal direction change rate of the circular motion trajectory of the machine tool 50 based on the circular motion trajectory data from the circular motion trajectory data acquisition unit 12. The normal direction change rate will be described with Reference to FIGS. 4 and 5. The circular motion trajectory data from the circular motion trajectory data acquisition unit 12 includes two-dimensional coordinate values. The example shown in FIG. 4 is partial cross-sectional view in which a cylindrical workpiece W has been cut along the plane (XY plane) perpendicular to the Z-axis. Normal vectors can be set at predetermined intervals on the surface of the workpiece W. The workpiece W is cut at predetermined intervals along the XY plane. By setting normal vectors at predetermined intervals in each cutting plane, it is possible to evaluate the entire surface of the workpiece W.

Set points 40 are set at predetermined intervals along the machined surface of the workpiece W. Next, at the set points 40, normal vectors $n_i$ perpendicular to the surface inclination are set. The normal vectors $n_i$ are normal vectors of the $i^{th}$ set point 40. Angles $\theta_i$ with respect to the normal direction can be set for the normal vectors $n_i$. The angle relative to the Y-axis is set as the normal direction angle $\theta_i$.

In FIG. 5, the coordinate values of the $i^{th}$ set point 42 and the $(i+1)^{th}$ set point 44 are known. A vector $a_i$ can be set based on the coordinate values of these two set points 42, 44. The vector $a_i$ is the vector from set point 42 toward set point 44. The vector perpendicular

to vector $a_i$ can be set as the normal vector $n_i$. The normal direction angle $\theta_i$ at this time can be calculated from the following formula (1). The normal direction angle $\theta_i$ for the $i^{th}$ set point of the machined surface can be calculated in this manner.

[Formula 1]

$$\theta_i = \tan^{-1}\frac{\left(y_{i+1} - y_i\right)}{\left(x_{i+1} - x_i\right)} \quad \cdots(1)$$

$\theta_i$ is the normal direction angle at the $i^{th}$ set point

The normal direction change rate calculation unit 14 calculates the normal direction change rate at the set point 40. The normal direction change rate is the rate of change of the angle of the normal direction of mutually adjacent set points. An example thereof is the change rate from the normal direction angle $\theta_i$ to the normal direction angle $\theta_{i+1}$. The normal direction change rate can be calculated from the following formula (2). The following formula (2) represents the normal direction change rate at the $i^{th}$ set point 40 of the design shape. The normal direction change rate of the evaluation target shape can also be calculated by the same method. Note that it is geometrically clear that the normal direction change rate is the same as the change rate in the direction tangential to the machined surface.

[Formula 2]

$$\frac{d\theta_i}{dx} = \left(\frac{\theta_{(i+1)} - \theta_i}{x_{(i+1)} - x_i}\right) \quad \cdots(2)$$

$d\theta_i/dx$ is the normal direction change rate

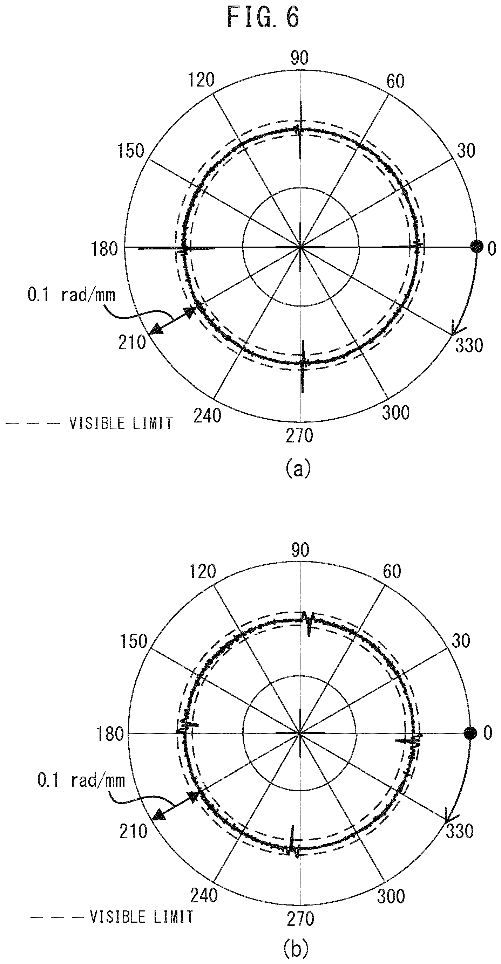

The polar coordinate change unit 18 changes the normal direction change rate obtained in this manner to polar coordinates, and transmits the change rate to the display unit 22 along with the visible limit values of the normal direction change rate stored in the visible limit data storage unit 16. FIG. 6 shows the calculation results of the normal direction change rate calculation unit 14 displayed on the display unit 22.

In FIG. 6, the visible limit values of the normal direction change rate are represented by dashed lines. FIGS. 6(a) and 6(b) correspond to FIGS. 2(a) and 2(b) and FIGS. 3(a) and 3(b). Note that the normal direction change rate of the trajectory is obtained by extracting only spatial frequency components which are visually recognizable by a person from a geometric normal direction change rate of the trajectory. The range of spatial frequency components which are visually recognizable by a person may be determined based on an ophthalmologic contrast sensitivity curve or may be determined using a shape separately prepared for evaluation.

Further, in the drawings, the separately evaluated human normal direction change rate visual recognition limit is also represented by a dashed line. When FIG. 6(a) and FIG. 6(b) are compared with each other, a greater normal direction change rate occurs in FIG. 6(a), and even if the error of the circular motion trajectory shown in FIG. 2(a) is smaller than that of the circular motion trajectory shown in FIG. 2(b), specifically, even if the machining accuracy is high, clear machining marks occur as shown in FIG. 3(a). Thus, according to the motion evaluation device 24, the motion evaluation method of the present invention enables motion evaluation corresponding to the appearance of the machined surface by causing the machine tool 50 to perform circular motion and acquiring the trajectory data thereof prior to machining.

Furthermore, the operator of the machine tool 50 refers to the normal direction change rate displayed on the display unit 22, and when there is a normal direction change rate which is equal to or greater than the visually recognizable limit, the operator corrects the control parameters of the machine tool via the input device 28 and the parameter change unit 26, and repeats this process until the normal direction change rate is equal to or less than the visually recognizable limit. The adjustment target control parameters include position loop gain, speed loop gain, speed loop integral gain or time constant, friction compensation parameters, and backlash correction parameters.

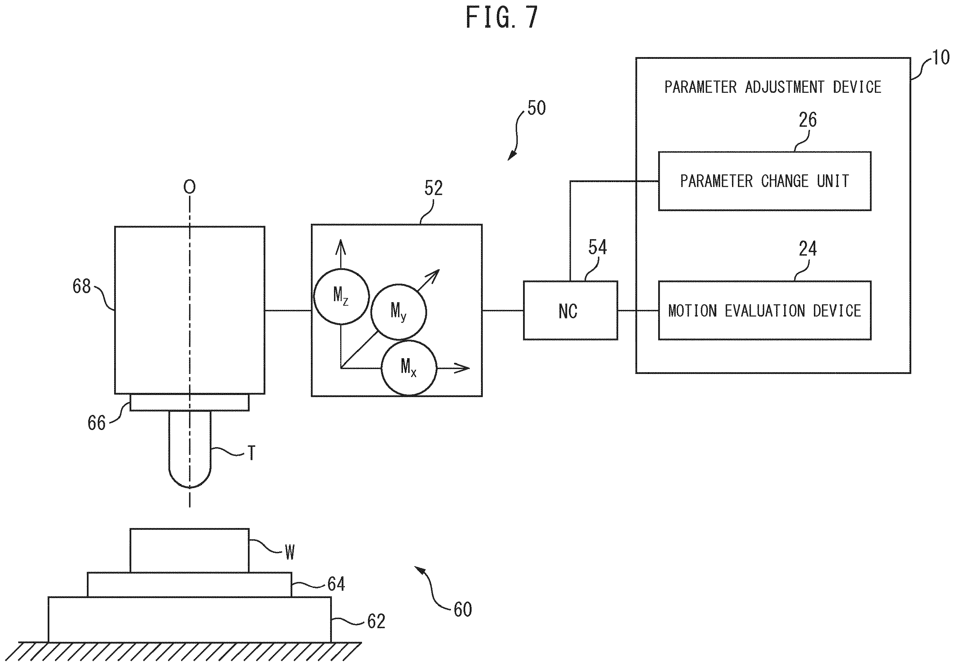

Next, an application example of the parameter adjustment device 10 of the present invention will be described with reference to FIG. 7. In the example shown in FIG. 7, the circular motion trajectory data acquisition unit 12 is constituted by the NC device of the machine tool 50. In the machine tool 50 of FIG. 7, the parameter adjustment device 10 is combined with the machining device 60. The machining device 60 comprises, as primary constituent elements, a bed 62 as a base secured to the floor of a factory, a table 64 which is attached to the upper surface of the bed 62 and on an upper surface of which the workpiece W is secured, a spindle head 68 which supports a spindle 66, on a tip of which a tool T facing the workpiece W secured to the bed 62 is mounted, so as to be rotatable around a vertical axis of rotation O, a drive mechanism 52 for reciprocally driving the spindle head 68 in the X-axis, Y-axis, and Z-axis orthogonal directions relative to the bed 62, and an NC device 54 for controlling the servomotors of the drive mechanism 52.

The drive mechanism 52 comprises, for example, X-axis, Y-axis, and Z-axis ball screws (not illustrated), nuts (not illustrated) for engagement with the ball screws, X-axis, Y-axis, and Z-axis drive motors Mx, My, and Mz consisting of servomotors connected to one end of each of the X-axis, Y-axis, and Z-axis ball screws for rotationally driving the X-axis, Y-axis, and Z-axis ball screws. Furthermore, in addition to the three orthogonal feed axes of X-, Y-, and Z-axes, the machine tool 50 may include one or more rotational feed axes such as an A-axis for rotationally feeding about the X-axis in the horizontal direction, or a C-axis for rotationally feeding about the Z-axis in vertical direction. In such a case, in addition to the X-axis, Y-axis, and Z-axis drive motors Mx, My, and Mz, the drive mechanism 52 may include servomotors for the rotational feed axes such as the A-axis and C-axis.

The machining device 60 is provided with digital scales (not illustrated) for detecting the positions of the X-, Y-, and Z-feed axes, and the position of each of the feed axes is fed back to the NC device 54. The circular motion trajectory data acquisition unit 12 of the motion evaluation device 24 receives trajectory data from the NC device 54 when the spindle 66 of the machining device 60 undergoes circular motion in the XY plane.

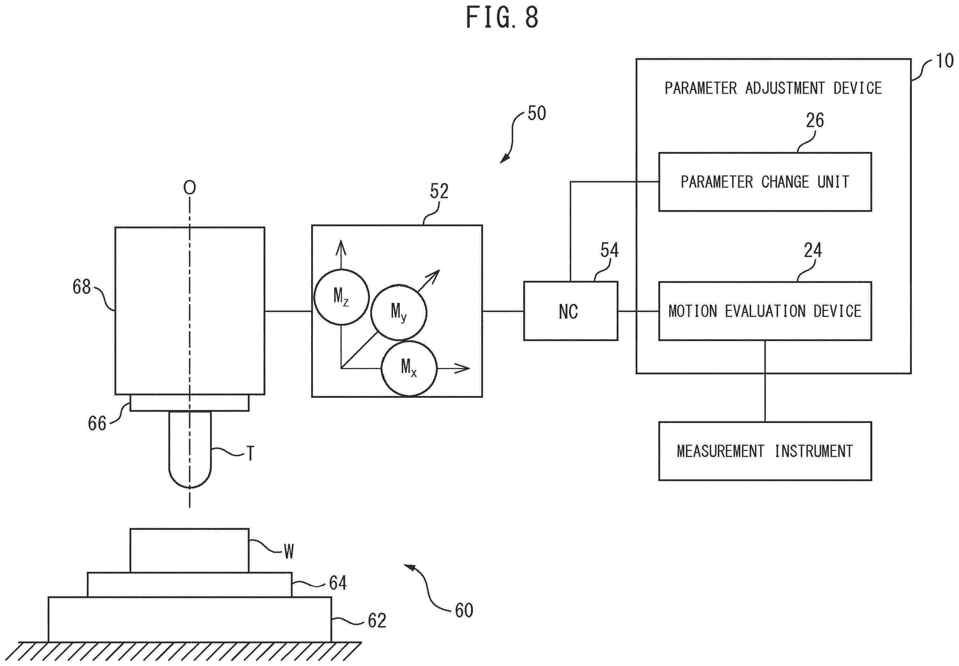

Next, another application example of the parameter adjustment device 10 of the present invention will be described with reference to FIG. 8. In the example shown in FIG. 8, the machine tool 50 comprises a measurement instrument 80 such as a ball bar gauge or a cross-grid scale. In the example of FIG. 8, the circular motion trajectory data acquisition unit 12 receives trajectory data from the NC device 54 when the spindle 66 of the machining device 60 undergoes circular motion in the XY plane.

In the configurations of FIGS. 7 and 8, the parameter adjustment device 10 can be incorporated as a part of the control program of the machine controller (not illustrated) of the machining device 60 or the NC device 54. In this case, the display unit 22 and the input device 26 can be constituted by the touch panel (not illustrated) provided on the control panel (not illustrated) of the machining device 60.

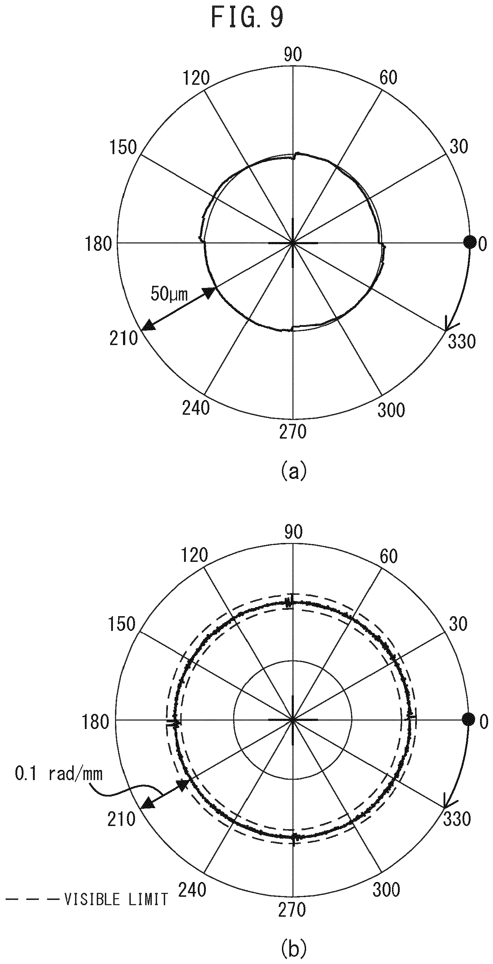

FIG. 9 shows an example in which the adjustment method according to the present invention is applied. FIG. 9(a) is circular motion trajectory display results according to the prior art, and FIG. 9(b) is display results according to the present invention. As shown in FIG. 9(b), according to the present invention, the normal direction change rate of the trajectory is equal to or less than the human visually recognizable limit represented by the dashed line. The normal direction change rate of the trajectory is obtained by extracting only spatial frequency components which are visually recognizable by a person from a geometric normal direction change rate of the trajectory.

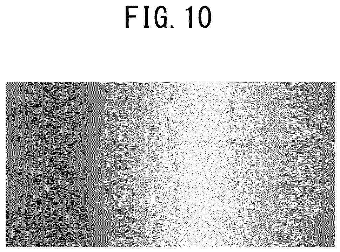

FIG. 10 shows the results of photography of a machined surface in which trajectory errors have occurred in the vicinity of 90° when cylindrical machining is performed using a peripheral blade of a square end mill under conditions identical to those measured for the motion trajectories of FIG. 9. According to FIG. 10, there are no visible streak-like machining marks on the machined surface, and it can be seen that a machined surface without visual defects can be obtained using the parameter adjustment method according to the present invention.

Furthermore, though examples in which the normal direction change rate is calculated from a circular motion trajectory have been described in the embodiments described above, equivalents of the normal direction change rate, such as the tangential change rate of the trajectory or the derivative value of the trajectory itself could be used in alternative embodiments, that are not encompassed by the present invention.

REFERENCE SIGNS LIST

10　parameter adjustment device
12　circular motion trajectory data acquisition unit
14　normal direction change rate calculation unit
16　visible limit data storage unit
18　polar coordinate change unit
20　trajectory analysis unit
22　display unit
24　motion evaluation device
26　parameter change unit
28　input device
40　set point
42　set point
44　set point
50　machine tool
52　drive mechanism
54　NC device
60　machining device
62　bed
64　table
66　spindle
68　spindle head
80　measurement instrument

**Claims**

1. A parameter adjustment method for evaluating a motion characteristic of a numerically controlled machine tool (50) using a circular motion test and adjusting control parameters of the machine tool (50), wherein the control parameters include position loop gain, speed loop gain, speed loop integral gain or time constant, friction compensation parameters and backlash correction parameters, and wherein the method comprises the steps of:

(1) by a normal direction change rate calculation unit (14), calculating a normal direction change rate of a trajectory from a circular motion trajectory obtained from a circular motion trajectory data acquisition unit (12);
(2) by a polar coordinate change unit (18), changing the normal direction change rate into polar coordinates;
(3) by a display unit (22), displaying the normal direction change rate of the trajectory as polar coordinates along with a normal direction change rate limit at which a shape change can

be visually recognized by a person;
(4) by a parameter change unit (26) and associated input device (28), adjusting the control parameters of the machine tool (50) when the normal direction change rate is equal to or greater than the normal direction change rate limit; and
(5) repeating steps 1 to 4 until the normal direction change rate is equal to or less

than the normal direction change rate limit.

2. The method according to claim 1, wherein the normal direction change rate of the trajectory is obtained by extracting only spatial frequency components which are visually recognizable by a person from a geometric normal direction change rate of the trajectory.

3. A workpiece machining method, comprising the steps of:
feeding a spindle (66) along a predetermined circumference within a predetermined plane; and
after feeding the spindle (66) along a predetermined circumference, adjusting the control parameters of the machine tool (50) according to the method of claims 1 or 2.

**Patentansprüche**

1. Parametereinstellungsverfahren zum Auswerten einer Bewegungseigenschaft einer numerisch gesteuerten Werkzeugmaschine (50) unter Verwendung eines Kreisbewegungstests und zum Einstellen von Steuerparametern der Werkzeugmaschine (50), wobei die Steuerparameter eine Positionsschleifenverstärkung, eine Geschwindigkeitsschleifenverstärkung, eine Geschwindigkeitsschleifenintegralverstärkung oder eine Zeitkonstante, Reibungskompensationsparameter und Spielkorrekturparameter umfassen und wobei das Verfahren die Schritte umfasst:

(1) durch eine Normalenrichtungsänderungsratenberechnungseinheit (14), Berechnen einer Normalenrichtungsänderungsrate einer Trajektorie aus einer Kreisbewegungstrajektorie, die von einer Kreisbewegungstrajektoriendatenerfassungseinheit (12) erhalten wurde;
(2) durch eine Polarkoordinatenänderungseinheit (18), Ändern der Normalenrichtungsänderungsrate in Polarkoordinaten;
(3) durch eine Anzeigeeinheit (22), Anzeigen der Normalenrichtungsänderungsrate der Trajektorie als Polarkoordinaten zusammen mit einer Normalenrichtungsänderungsratengrenze, bei der eine Formänderung von einer Person visuell erkannt werden kann;

(4) durch eine Parameteränderungseinheit (26) und eine zugehörige Eingabevorrichtung (28), Einstellen der Steuerparameter der Werkzeugmaschine (50), wenn die Normalenrichtungsänderungsrate gleich oder größer als die Normalenrichtungsänderungsratengrenze ist; und
(5) Wiederholen der Schritte 1 bis 4, bis die Normalenrichtungsänderungsrate gleich oder kleiner als die Normalenrichtungsänderungsratengrenze ist.

2. Verfahren nach Anspruch 1, wobei die Normalenrichtungsänderungsrate der Trajektorie erhalten wird, indem nur Ortsfrequenzkomponenten extrahiert werden, die für eine Person aus einer geometrischen Normalenrichtungsänderungsrate der Trajektorie visuell erkennbar sind.

3. Werkstückbearbeitungsverfahren umfassend die Schritte:

Zuführen einer Spindel (66) entlang eines vorgegebenen Umfangs innerhalb einer vorgegebenen Ebene und
Einstellen der Steuerparameter der Werkzeugmaschine (50) gemäß dem Verfahren der Ansprüche 1 oder 2 nach dem Zuführen der Spindel (66) entlang eines vorgegebenen Umfangs.

**Revendications**

1. Procédé d'ajustement de paramètres pour évaluer une caractéristique de mouvement d'une machine-outil à commande numérique (50) en utilisant un test de mouvement circulaire et ajuster des paramètres de commande de la machine-outil (50), dans lequel les paramètres de commande incluent le gain de boucle de position, le gain de boucle de vitesse, le gain intégral de boucle de vitesse ou la constante de temps, des paramètres de compensation de frottement et des paramètres de correction de jeu, et dans lequel le procédé comprend les étapes consistant à :

(1) par l'intermédiaire d'une unité de calcul de taux de changement de direction normal (14), calculer un taux de changement de direction normale d'une trajectoire à partir d'une trajectoire de mouvement circulaire obtenue à partir d'une unité d'acquisition de données de trajectoire de mouvement circulaire (12) ;
(2) par l'intermédiaire d'une unité de changement en coordonnées polaires (18), changer le taux de changement de direction normale en coordonnées polaires ;
(3) par l'intermédiaire d'une unité d'affichage (22), afficher le taux de changement de direction normale de la trajectoire sous la forme de coordonnées polaires avec une limite de taux de changement de direction normale à laquelle un changement de forme peut être reconnu visuellement par une personne ;

(4) par l'intermédiaire d'une unité de changement de paramètres (26) et d'un dispositif d'entrée associé (28), ajuster les paramètres de commande de la machine-outil (50) lorsque le taux de changement de direction normale est égal ou supérieur à la limite de taux de changement de direction normale ; et

(5) répéter les étapes 1 à 4 jusqu'à ce que le taux de changement de direction normale soit égal ou inférieur à la limite de taux de changement de direction normale.

2. Procédé selon la revendication 1, dans lequel le taux de changement de direction normale de la trajectoire est obtenu en extrayant uniquement des composantes de fréquence spatiale qui sont reconnaissables visuellement par une personne à partir d'un taux de changement de direction normale géométrique de la trajectoire.

3. Procédé d'usinage de pièce à usiner, comprenant les étapes consistant à :

alimenter une broche (66) le long d'une circonférence prédéterminée dans un plan prédéterminé ; et

après avoir alimenter la broche (66) le long d'une circonférence prédéterminée, ajuster les paramètres de commande de la machine-outil (50) selon le procédé des revendications 1 ou 2.

# FIG. 1

INPUT DEVICE ~28

PARAMETER ADJUSTMENT DEVICE ~10

PARAMETER CHANGE UNIT ~26

24

MOTION EVALUATION DEVICE

TRAJECTORY ANALYSIS UNIT

~20

MACHINE TOOL

50

CIRCULAR MOTION TRAJECTORY DATA ACQUISITION UNIT

12

NORMAL DIRECTION CHANGE RATE CALCULATION UNIT ~14

VISIBLE LIMIT DATA STORAGE UNIT ~16

POLAR COORDINATE CHANGE UNIT

18

DISPLAY UNIT

22

EP 3 582 042 B1

# FIG. 2

(a)

(b)

# FIG. 3

(a)

(b)

# FIG. 4

$n_i, n_{ir}$: NORMAL VECTORS OF $i^{th}$ SET POINT
$\theta_i, \theta_{ir}$: ANGLES OF NORMAL DIRECTION OF $i^{th}$ SET POINT

# FIG. 5

# FIG. 6

(a)

(b)

# FIG. 7

EP 3 582 042 B1

FIG. 8

# FIG. 9

(a)

(b)

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009080616 A

- WO 2016125797 A1

**Non-patent literature cited in the description**

- Machine Tool Test Method Standards Part 4: Circular motion test by Numerical Control. *JIS B6190-4*

- Study on the evaluation method for finished surface based on human visual characteristic. **SATO YUKI et al.** 2016 INTERNATIONAL SYMPOSIUM ON FLEXIBLE AUTOMATION (ISFA). IEEE, 01 August 2016, 428-431